# EUROPÄISCHE PATENTSCHRIFT

(11) **EP 0 903 328 B1**
(45) Veröffentlichungstag und Bekanntmachung des Hinweises auf die Patenterteilung: **21.04.2004**
(21) Anmeldenummer: 98115758.9
(22) Anmeldetag: 21.08.1998
(51) Int. Cl.: C04B 18/24, E04C 2/26

(54) **Baustoffmischung aus ungebranntem Lehm und/oder Ton**
Building material made of unfired loam or clay
Matériaux de construction en limon ou argile cru

(30) Priorität: 22.08.1997 DE 19736526
(43) Veröffentlichungstag der Anmeldung: 24.03.1999
(73) Patentinhaber: Meingast, Roland, 2500 Baden (AT)
(72) Erfinder: Meingast, Roland, 2500 Baden (AT); Lumplecker, Josef, 3335 Weyer (AT)
(74) Vertreter: Olbricht, Karl Heinrich, Dipl.-Phys.

(56) Entgegenhaltungen:
- DE-A- 2 004 672
- DE-A- 3 612 520
- DE-A- 4 215 081
- DE-A- 4 306 438
- DE-A- 19 506 868
- DE-A- 19 610 247
- US-A- 4 373 957
- US-A- 4 947 611
- DATABASE WPI Section Ch, Week 9247 Derwent Publications Ltd., London, GB; Class L02, AN 92-389272 XP002090362 & SU 1 699 980 A (UKR WATER ECONOMICS ENG INST), 23. Dezember 1991

## Beschreibung

Die Erfindung betrifft eine Baustoffmischung aus ungebranntem Lehm und/oder Ton gemäß dem Oberbegriff von Anspruch 1, ein Verfahren zu deren Herstellung gemäß dem Oberbegriff von Anspruch 3, eine Verwendung der Baustoffmischung gemäß dem Oberbegriff von Anspruch 6 sowie ein lehm-Fertigbauteil, hergestellt unter Verwendung der Baustoffmischung gemäß Anspruch 10.

Baustoffmischungen aus ungebranntem Lehm oder Ton sowie deren Verarbeitung bzw. Verwendung sind bekannt. Durch Beimischen von pflanzlichen Faserzuschlagstoffen wie Hanf, Flachs, Reisstroh u.dgl. sollen die technischen Eigenschaften der Baustoffe bzw. der daraus gefertigten Produkte bzw. Bauwerke verbessert werden, ohne deren biologische Abbaubarkeit nach Ablauf der Nutzungsdauer zu beeinträchtigen oder zu verhindern (siehe beispielsweise DE-A-41 38 683 oder DE-A-195 06 868). In DATABASE WPI Section Ch, Week 9247 Derwent Publication Ltd. [London, GB], Class L02, AN 92-389272 & SU 1 699 980 ist eine Baustoff-Mischung aus ungebranntem Lehm und Abfall aus zerkleinertem Flachs beschrieben, jedoch ohne Erwähnung von Bast oder Bastfasern, erst recht ohne trockene oder feuchte Aufbereitung solcher Fasern. Derartige Lehmbaustoffe härten daher nicht durch chemisches Abbinden von Bindemitteln aus. Sie erreichen ihre volle Festigkeit vielmehr durch Austrocknen ihrer Substanz bis auf eine geringe Gleichgewichtsfeuchtigkeit. Ein Wandputz gemäß DE-A-195 06 868 enthält eine Beimischung von trocken-mechanisch, nämlich durch Hecheln aufbereiteten Hanffasern. Angaben zur Bemessung und betreffend einen Mindest-Gewichtsanteil oder eine Konsistenz gehen allerdings aus der Druckschrift nicht hervor. Das Verfahren zum Herstellen des Wandputzes erscheint verhältnismäßig aufwendig.

Seit alters her ist beispielsweise ein Verfahren zur Herstellung von Lehmputz bekannt, bei dem ein Gemenge aus Lehm, Sand und Strohäcksel mit Wasser gemischt und dann als Verputzmörtel verarbeitet wird. Für Formteile bzw. Dämmstoffe, die nach einem Verfahren entsprechend DE-A-43 06 438 mit pflanzliche Fasern enthaltendem, aber nicht voll recyclingfähigem anorganischem Material hergestellt werden, wird als Klebemittel eine Mischung aus Phenoloxidasen und Lignin bevorzugt in wäßriger Lösung eingesetzt, um die feinteilige anorganische Masse (mit oder ohne Einlage zu verkleben, und zwar mit Gewichtsanteilen von 1 bis 30 %. Der Putz härtet durch Austrocknen auf der Wand aus. Problematisch hierbei ist jedoch, daß - wie bei allen diesen bekannten Aufbereitungs- und Verarbeitungsverfahren - eine dauerhafte Endfestigkeit der Lehmbaustoffe bzw. der daraus entstandenen Bauwerke oft nicht gesichert ist.

Eine Hauptvoraussetzung zum Erzielen der optimalen Festigkeit eines Lehmbaustoffs besteht darin, das Verhältnis von Tonmineralien und Anmachwasser derart einzustellen, daß die Adhäsionskräfte des Tonanteils innerhalb der Lehmbaustoffmischung im fertigen und damit ausgetrockneten Zustand maximal genutzt werden. Deshalb wird üblichen Lehmbaustoffmischungen, z.B. zur Verwendung auf tragenden Untergründen oder freistehenden Tragkonstruktionen, bei der Aufbereitung für die Verarbeitung vor Ort soviel Anmachwasser zugesetzt, daß eine flüssige, putzmörtelartige Konsistenz erreicht wird. Diese entspricht im wesentlichen dem Konsistenzbereich K 5 für Beton gemäß ÖNORM B 4200 (Teil 10, Abschnitt 3.8). Derartige Mischungen haften gut auf den Tragkonstruktionen. Aufgrund der geringen inneren Reibungswiderstände lassen sich jedoch auf vertikalen Untergrundflächen nur wenige Zentimeter starke Schichten in einem Arbeitsgang auftragen, sonst treten Deformationen innerhalb der Baustoffstruktur auf und es kommt zum Abrutschen der Baustoffschicht.

Bei wandbildenden Lehmbauverfahren versucht man dieses Problem mit Hilfe demontierbarer oder verlorener Schalungen zu lösen. Dies führt allerdings zu einer Verlängerung der Trocknungszeit und damit insgesamt zu einer Erhöhung der Herstellkosten. Alternativ wird mit Beimischungen aus Zement oder anderen nicht abbaubaren Hilfsmitteln versucht, die Anfangsfestigkeit der Lehmbauschicht zu verbessern. Dabei geht jedoch eine wichtige Eigenschaft des Lehmbaustoffs verloren, nämlich die vollständige Reintegrierbarkeit in die biologischen Kreisläufe. Derartige Mischungen sind nach einem Abbruch als normaler Bauschutt zu deklarieren und damit als Sondermüll zu entsorgen.

Bei der Herstellung von Lehmbauplatten für den Trockenbau werden mit hohem Fertigungsaufwand mehrere Lagen von Armierungen, z.B. Schilfrohrmatten oder Jute- gewebe, eingebracht, um die erforderliche Biegefestigkeit und Formstabilität zu erreichen.

Ein anderer bekannter Verfahrensweg besteht darin, lediglich erdfeuchte Lehmbaustoffmischungen mit einer relativ steifen Konsistenz herzustellen. Diese entspricht zumeist dem Konsistenzbereich K1 für Beton gemäß ÖNORM B 4200. Die Baustoffmischung muß jedoch mit aufwendigen Druckluftstampfwerkzeugen in geeigneten Schalungen verdichtet werden. Derartige Bauteile sind zwar bereits nach relativ kurzer Zeit selbsttragend und formstabil, so daß sie noch in feuchtem Zustand ausgeschalt werden können; ihre verarbeitungsbedingte Festigkeit erreichen sie aber erst nach dem vollständigen Austrocknen, d.h. nach Erreichen der Gleichgewichtsfeuchte. Ein weiterer Nachteil der erdfeuchten Lehmbaustoffmischungen ist ihre deutlich geringere Endfestigkeit im Vergleich zu naß gemischten Lehmbauteilen, weil die Bindekraft des Tonanteils nicht ausreicht. Erdfeuchte Lehmbaustoffe sind daher für die Herstellung dünner Bauplatten für den Trockenausbau nahezu ungeeignet.

Die oben genannten Beimischungen aus Getreidestrohhäcksel bringen ebenfalls keine Lösung für die geschilderten Verarbeitungs- und Festigkeitsprobleme. Darüber hinaus besteht bei solchen Faserbeimischungen die Gefahr, daß mikrobielle Abbauprozesse auftreten, insbesondere bei größeren Bauteilstärken. Beimischungen mit fungiziden oder bakteriziden Substanzen würden dieses Problem zwar beseitigen; der Lehmbaustoff würde dann allerdings nach dem Gebrauch zum Sondermüll. Gleiches gilt für Beimischungen aus Zement, Gips oder Kunstfasern. Diese können zwar einzelne technische Eigenschaften von Lehmbaustoffen verbessern, führen aber zum Verlust der vollständigen Wiederverwertbarkeit. Typische Beispiele sind in DE-A-196 10 247 beschrieben, wonach zur Herstellung von Bauelementen, Formteilen, Pellets u.dgl. zwar auch nachwachsende Rohstoffe in Gestalt von Pflanzenstengeln verwendet werden, aber verschiedenste nicht wiederaufbereitbare Stoffe unerläßlich sind, namentlich Tränkungs- und Bindemittel wie Kalk, Gips, Zement, Glas, Glasfasern, Borsalze u.dgl., ja sogar Draht. Soweit gehäckselte Sonnenblumen-Stengel zu Mark bzw. Markgranulat verarbeitet werden, dient dies in herkömmlichen Baumaterialien als Lockerungsmittel, Dichtungsmasse, Füllstoff usw. Selbst längsgespaltene oder quergeschnittene Stengel, die z.B. mit Stärke, Leim, Papiermaschee oder Lehm abgebunden und anschließend verpreßt werden, haben mit einer ökologischen Baustoffmischung nichts zu tun.

US-A-4 947 611 gibt Baustoffmischungen aus Lehm bzw. Ton und Bastfasem z.B. im Verhältnis 1:1 an, wobei die Bastfasem allerdings nur etwa 1 bis 3 mm lang sind, d.h. extrem kurz. Dem Gemisch wird Fasermaterial der Länge 3 bis 5 cm zugesetzt, bevor es in eine Form ausgegossen wird. Die entstandenen Wandplatten haben Oberflächen mit Vertiefungen und Löchern, was zu schnellerer Trocknung beitragen soll. Alternativ werden mehr- oder vielschichtige Verbundkörper mit unterschiedlich ausgerichteten Verstärkungen erzeugt. Dünne Platten können zum Verschalen an Lattungen oder als Ausfachung dienen, sind selbst jedoch mehr dekorativ als funktionell.

Ähnlich beschreibt DE-A-42 15 081 ein Lehmbau-Wandelement mit einem Traggerippe und Kreuzversteifung(en) zum Einbau zwischen Balken ("Rähm") mit Nut/Feder-Befestigung, wobei die Leichtlehm-Füllung ausdrücklich keine tragende Funktion hat.

Ziel der Erfindung ist es, eine Baustoffmischung zu entwickeln, deren Eigenschaften eine einfache und rationelle Verarbeitung ermöglichen. Sie soll kostengünstig herstellbar und vollständig recyclingfähig sein. Ein weiteres wichtiges Ziel besteht darin, ein geeignetes Verfahren zur Herstellung eines solchen Baustoffs zu schaffen. Ferner wird dauerhafte Endfestigkeit der gefertigten Lehmprodukte bzw. -bauwerke angestrebt.

Hauptmerkmale der Erfindung sind in den kennzeichnenden Teilen der Ansprüche 1, 3, 6 und 10 enthalten. Ausgestaltungen sind Gegenstand der Ansprüche 2, 4, 7 bis 9 und 11 bis 14.

Bei einer Baustoffmischung aus ungebranntem Lehm und/oder Ton mit einer Beimischung aus pflanzlichen Fasern, wobei die Fasern mechanisch aufbereitete Bastfasem sind, insbesondere biogene Fasern wie Hanf-, Flachs-, Kenaf- und Nesselfasern, wobei der Baustoff frei von synthetischen und/oder biologisch nicht abbaubaren Zuschlagstoffen ist, sieht die Erfindung laut Anspruch 1 vor, daß die Bastfasern trocken-mechanisch oder feucht-mikrobiell-mechanisch aufbereitet sind und eine Länge von 5 bis 15 mm aufweisen, wobei der Anteil der Bastfasem über 0,1 Gewichtsprozent der Gesamtbaustoffmasse beträgt und wobei die Konsistenz der Baustoffmischung zwischen den Konsistenzbereichen K3 und K5 gemäß ÖNORM B 4200 (Teil 10 Abschnitt 3.8) liegt. Diese Aufbereitung bzw. Zusammensetzung gewährleistet eine überraschend gute Verarbeitung der Baustoffmischung. Die fertiggestellten Bauteile bzw. Bauwerke weisen deutlich höhere Biegezug- und Zugfestigkeiten auf, ohne jedoch die Recyclingfähigkeit zu beeinträchtigen. Sowohl der Baustoff selbst als auch die fertigen Produkte können problemlos wiederverwertet werden. Wichtige Eigenschaften wie Transportfähigkeit, Kantenfestigkeit und Bearbeitbarkeit der Oberfläche sind im Vergleich zu herkömmlichen Baustoffmischungen verbessert. Die Verwendung mechanisch aufbereiteter Bastfasern ermöglicht eine äußerst kostengünstige Herstellung des Baustoffs, was sich günstig auf den Endpreis der Baustoffmischung bzw. der einzelnen Bauteile auswirkt. Die Konsistenz der Baustoffmischung erlaubt deren äußerst einfache und rationelle Verarbeitung. Man erzielt gute Hafteigenschaften und darüber hinaus eine gute, dauerhafte Endfestigkeit des getrockneten Baustoffs. In vertikaler Richtung treten nahezu keine Abrutschungen oder Deformationen auf. Das Aufbringen selbst stärkerer Schichten kann in nur einem Arbeitsgang erfolgen. Schalungen sind nicht nötig. Die Verarbeitung ist problemlos auch ohne mechanische Hilfsmittel möglich. Durch die von der Konsistenz vorgegebene Menge Anmachwasser kommt die Bindekraft des Tonanteils im Lehmbauteil optimal zur Wirkung. Weil der Anteil der Bastfasern über 0,1 Gewichtsprozent der Gesamtbaustoffmasse beträgt, lassen sich Rohdichte und Biegezugfestigkeit optimal einstellen. Im Vergleich zu herkömmlichen Mischungen ist letztere deutlich verbessert, und die maschinelle Verarbeitung ist problemlos möglich.

Anspruch 2 sieht eine Beimischung aus pflanzlichen Fasern vor, wodurch die technischen Eigenschaften der Baustoffmischung weiter verbessert werden können. Denkbar ist eine weitere Beimischung von mineralischen und/oder pflanzlichen Zuschlagstoffen wie Holzhackgut oder Sägespäne, die als Füllstoffe die mechanischen Eigenschaften der Mischung beeinflussen. Die biologische Abbaubarkeit ist auch hierbei stets gewährleistet.

Alle genannten Vorteile gelten auch für das erfindungsgemäße Verfahren. Bei diesem wird laut Anspruch 3 ein Gemenge aus ungebranntem Lehm und/oder Ton mit einer erforderlichen Menge Sand und einer Beimischung aus pflanzlichen Fasern versetzt, wobei die Fasern mechanisch aufbereitete Bastfasern sind, insbesondere biogene Fasern wie Hanf-, Flachs-, Kenaf- und Nesselfasern, und wobei der Baustoff frei von synthetischen und/oder biologisch nicht abbaubaren Zuschlagstoffe ist. Hierzu sieht die Erfindung vor, daß die Bastfasem mit einer Länge von 5 bis 15 mm trocken-mechanisch oder feucht-mikrobiell-mechanisch aufbereitet, daß die Bastfasem der Gesamtbaustoffmasse mit einem Anteil über 0,1 Gewichtsprozent zugegeben werden und daß die Konsistenz der Baustoffmischung unter Zugabe von Anmachwasser auf einen Wert zwischen den Konsistenzbereichen K3 und K5 gemäß ÖNORM B 4200 (Teil 10 Abschnitt 3.8) eingestellt wird. Man kann beispielsweise Hanfstroh direkt vom Feld oder Hanfkurzfasem verwenden, die als Nebenprodukt bei der Hanfverarbeitung anfallen. Das Versetzen der Baustoffmischung mit dem Anmachwasser kann direkt am Verarbeitungsort oder bereits am Herstellungsort erfolgen.

Die in den Ansprüchen 4 und 5 genannten Merkmale bilden günstige Ausgestaltungen des erfindungsgemäßen Verfahrens. Besonders vorteilhafte Verwendungen bzw. Verwendungsweisen sind in den Ansprüchen 6 bis 9 angegeben.

Ein unter Verwendung der oben geschilderten Baustoffmischung hergestelltes Lehm-Fertigbauteil hat gemäß dem unabhängigen Anspruch 10 eine Trägerplatte aus Holzwerkstoff, eine auf der Trägerplatte befestigte Tragstruktur aus Holzprofilen sowie eine die Trägerplatte und die Tragstruktur bedeckende Schicht einer Baustoffmischung. Es kann kostengünstig hergestellt und sowohl im Innenausbau als auch im Außenbereich vielfältig eingesetzt werden. Die Tragstruktur sorgt für einen dauerhaft festen und sicheren Halt der Baustoffschicht auf der Trägerplatte. Vorteilhafte Ausgestaltungen und Varianten solcher Lehm-Fertigbauteile sind in den Ansprüchen 11 bis 14 angegeben.

Weitere Merkmale, Einzelheiten und Vorteile der Erfindung ergeben sich aus dem Wortlaut der Ansprüche sowie aus der folgenden Beschreibung von Ausführungsbeispielen.

Als Basis für die Baustoffmischung - im folgenden als BioFaserLehm bezeichnet - wird Ton oder fetter Baulehm entsprechend der (ersatzlos zurückgezogenen) Lehmbau-Vornorm DIN 18952, Blatt 1 verwendet, der nach den Regeln der Lehmbautechnik zu magern ist. Anschließend wird neben einer erforderlichen Menge Sand eine Beimischung aus pflanzlichen Fasern zugesetzt. Hierbei verwendet man beispielsweise Hanffasern aus Hanfstroh vom Feld oder aus Hanfkurzfasern, die als Nebenprodukte bei der Hanfverarbeitung anfallen. Die Hanffasem werden trocken-mechanisch oder feucht-mikrobiell-mechanisch aufbereitet. Dadurch erhält man einen plastischen Lehmbaustoff, der trotz nasser, maschineller Aufbereitung der jeweiligen Mischung aus Lehm oder Ton mit sandigen und/oder biogenen Zuschlägen, eine optimale innere Reibung besitzt und sich in allen Arbeitslagen problemlos verarbeiten läßt. Plastisch bedeutet, daß die Konsistenz der Baustoffmischung zwischen den Konsistenzbereichen K3 und K5 gemäß ÖNORM B 4200 Teil 10 Abschnitt 3.8 liegt.

Je nach natürlicher Zusammensetzung der Rohstoffe kann fallweise auch auf eine Beimischung von weiteren mineralischen oder pflanzlichen Zuschlagstoffen verzichtet werden, was zu einer deutlichen Kostenreduktion führt. Bei Bedarf kann die Baustoffmischung zusätzlich den Schäbenanteil der Hanffasem oder je nach gewünschtem Einsatzzweck andere biogene Fasern enthalten. Für die maschinelle Verarbeitung des BioFaserLehms ist eine Faserlänge von weniger als 15 mm günstig. Zusätzliche Armierungen aus Hanflangfasem sind möglich. Andererseits kann man den BioFaserLehm mit einer Beimischung aus Tierhaaren versehen, und zwar entweder als weiteren Zusatz zu den pflanzlichen Fasern oder als deren Ersatz. Dies ergibt gute Materialeigenschaften, die sowohl die Verarbeitung als auch die Haltbarkeit der herzustellenden Endprodukte verbessern. Bevorzugt verwendet man geschnittene Schafwollkurzfaser, die sich kostengünstig und einfach verarbeiten läßt. Im folgenden werden Anwendungsbeispiele für BioFaserLehm in ausgewählten Lehmbautechniken beschrieben:

### 1. Spritzlehmtechnik

Die erfindungsgemäße Baustoffmischung läßt sich problemlos als Spritzlehm verarbeiten. Hierbei wird das mehrlagige Auftragen von Schichten aus herkömmlichem Lehmmörtel, insbesondere bei wandbildenden Verfahren unterhalb der obersten Putzlage, durch den Einsatz einer einzigen BioFaserLehm-Lage ersetzt. Der Auftrag erfolgt in einem einzigen Arbeitsgang, so daß keine Arbeitsunterbrechungen zwischen den bisherigen Arbeitsgängen mehr entstehen. Dadurch können die Herstellungskosten erheblich reduziert werden. Die äußerst homogene Schicht aus BioFaserLehm kann darüber hinaus eine höhere Festigkeit aufweisen als Schichten gleicher Dicke, die aus Spritzlehm in derzeit lehmbauüblicher Zusammensetzung hergestellt und mehrlagig aufgebaut werden. Das sog. Zureiben, d.h. das Glätten der fertigen Oberfläche, kann wesentlich früher erfolgen. Weiter ist die Gefahr der Rißbildung deutlich verringert.

Durch den Einsatz der technisch leistungsfähigen Hanffaser oder anderer biogener Fasern als Ersatz oder Ergänzung des üblichen Getreidestrohs, können ähnliche Eigenschaften wie bei Verwendung von synthetischen Fasern erzielt werden, ohne daß die vollständige biologische Abbaubarkeit (Abfallfreiheit) des Baustoffs verlorengeht.

### 2. Leichtlehm-Verarbeitung, insbesondere Holzleichtlehm-Verarbeitung

Ein derzeit übliches Verfahren besteht darin, daß zwischen eine verlorene und eine demontierbare Schalung Leichtlehm (Holzhackschnitzel-Lehm Mischungen oder ähnliche Mischungen wie Minerallehm R mit Blähton) gepumpt oder geschüttet wird, was insbesondere bei leichten Mischungen (unter 800 kg/m3 trocken) geringe oder ungleichmäßige Festigkeiten ergeben kann, die trotz leichter Nachverdichtung eine normale Belastung von Schrauben und Nägeln in der Wand unmöglich machen. Wenn dieser Nachteil vermieden werden soll, ist bei schwereren Leichtlehmmischungen zusätzliche kostenintensive Stampfarbeit erforderlich.

Durch mechanisches Aufspritzen einer Holzleichtlehm-Mischung, die, wie oben beschrieben, erfindungsgemäß mit Hanffasem versetzt wurde, mit Hilfe von Druckluft normal zur Wandoberfläche, kann die raumseitige Schalung entfallen und die Lehmbaustoff-Ausfachung wird im Vorgang des maschinellen Aufspritzens bereits optimal verdichtet, so daß das arbeitsintensive Stampfen entfallen kann. Auf diese Weise können Schichten von 16 cm und mehr in einem Arbeitsgang aufgebracht werden.

### 3. BioFaserLehm-Bauplatten-Herstellung

Durch Beimischung von Hanfkurzfasern und anderen biogener Fasern können Biofaser-Lehmbauplatten für den Trockenbau aus geeigneten Lehmen oder Tonen ähnlich den faserarmierten Gipsbauplatten ohne zusätzliche Armierungen wie Schilfrohreinlagen oder Gewebeeinlagen maschinell hergestellt werden.

### 4. BioFaserLehm-Schütt-Verfahren

Durch Beimischung von geringen Mengen geschnittener Hanffasern, die kleiner als 15 mm sind, können BioFaserLehm-Baustoffmischungen aus geeigneten Lehmen oder Tonen hergestellt werden, die plastisch und wegen des geringen Seitendrucks auch in leichte Schalungen eingebracht oder von Hand ohne Schalung aufgesetzt werden können. Es handelt sich dabei um eine technische Weiterentwicklung des historisch "Wellerbau" oder im bayrisch-österreichischen Raum auch "Wutzlmäuern" genannten Lehmbauverfahrens. Je nach Zusammensetzung des Lehm- oder Tonrohstoffs kann fallweise auch auf eine Beimischung von weiteren mineralischen oder pflanzlichen Zuschlagstoffen verzichtet werden.

Durch verbesserte Aufschließung der Bindekräfte im Baulehm kann dieses Lehmbauverfahren als statisch belastete Bauweise das Stampflehmverfahren ersetzen, wodurch sich eine deutliche Kostenreduktion gegenüber den heute üblichen Herstellungsverfahren im Stampflehmbau ergibt.

### 5. Weitere Einsatzbeispiele für BioFaserLehm

Die erfindungsgemäße Baustoffmischung ermöglicht die Herstellung von schweren Lehmdielenelementen, ähnlich den am Markt befindlichen Gipsdielen. Die BioFaserLehm-Dielen besitzen eine weitgehend fertige Oberfläche und können z.B. als raumklimaverbessernde, durch ihr hohes Gewicht thermisch wirksame Speichermassen in Holzriegelbauten verwendet werden.

Unter Verwendung von Leichtzuschlägen wie Sägespänen oder Holzhackgut können aus BioFaserLehm auch Leichtbauplatten zur Herstellung von Gebäudeinnenwänden produziert werden, wobei in diesen Platten oder Elementen einseitig oder beidseitig Nutensysteme eingeformt sein können, die für die spätere Verlegung von Rohrleitungen oder Kabeln, oder in der Mörtelfugenebene für eine zusätzliche Aussteifungsmöglichkeit der Platten oder Elemente untereinander dienen.

Weiter können mit diesem Baustoff wandgroße Fertigteile in den im Holzrahmenbau üblichen Dimensionen hergestellt werden. Die Oberfläche der verwendeten Holzkonstruktion des Fertigteils ist nicht geschlossen, sondern gegliedert und zwar derart, daß der mit Hanf- und anderen biogenen Fasern armierte Lehmbaustoff durch den Auftragsvorgang einen mechanisch wirksamen Verbund mit dem Holzteil der Konstruktion, sowie dort wo es möglich ist, auch mit einer gegebenenfalls eingesetzten Dämmstoffschicht eingeht. Die günstigen Eigenschaften des Baustoffs Lehm, wie die hohe Kapillarität, bewirkt im fertigen, trockenen Zustand einen konstruktiven Schutz für das Bauholz und für die meisten Naturfaserdämmstoffe. In vielen Anwendungsfällen liegt der Hanffaseranteil bei etwa einem Gewichtsprozent des Lehmbaustoffs.

Zusammenfassend läßt sich sagen, daß mit dem neuen Bauwerkstoff aus Lehm durch die Beimischung aus unverfilzten Hanfkurzfasern bzw. aus geannten biogenen Fasern eine überraschend rationelle Verarbeitung möglich wird. Darüber hinaus wird durch die erzielte Kostensenkung und die Verbesserung der technischen Eigenschaften ein breiteres Einsatzfeld für den Bauwerkstoff eröffnet.

Bei dem gegenständlichen Verfahren bleiben alle bauökologischen Vorteile des Rohstoffs Lehm erhalten, wie die Möglichkeit des vollständigen Recyclings durch Wiedererweichen mit Wasser und erneute Verarbeitung auch nach langen Zeiträumen und den Entfall der Notwendigkeit der Beimengung von nicht biologisch unschädlich abbaubaren synthetischen Zusatzstoffen, obwohl es sich bei BioFaserLehm im technischen Sinn um einen Verbundwerkstoff handelt. Es werden ausschließlich Lehm, Ton und Sande als fast unerschöpfliche, ubiquitär vorhandene Rohstoffe verwendet, sowie Hanf und andere biogene Fasern als nachwachsende Rohstoffe. Es sind bis heute keine negativen Einwirkungen des Baustoffs auf die menschliche Gesundheit bekannt geworden. Auch der im Verhältnis zu konventionellen Baustoffen geringe Energieeinsatz bei der Herstellung trägt zur hohen ökologischen Qualität der Baustoffmischung bei.

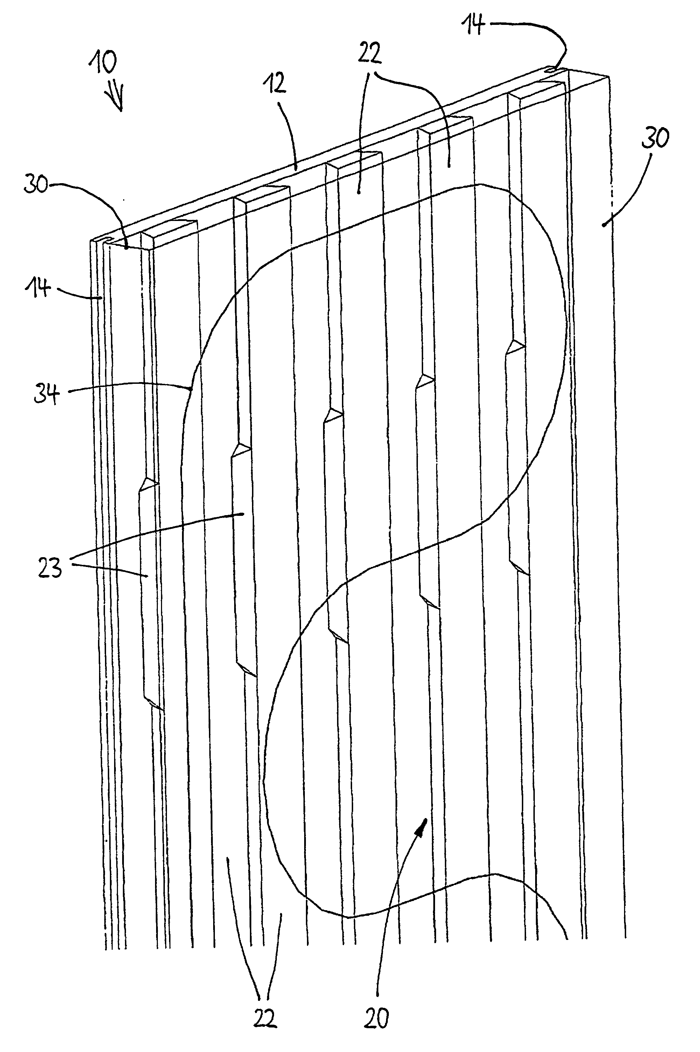

Ein weiteres Ausführungsbeispiel für die Verwendung der Baustoffmischung bei der Herstellung von Lehm-Fertigbauteilen wird anhand der beiliegenden Zeichnung beschrieben.

Deren einzige Figur zeigt eine Teil-Schrägansicht eines Lehmbaustoff-Wandelements. Dieses hat eine Trägerplatte aus Holzwerkstoff, z.B. MDF, Sperrholz oder Massivholz, auf der in gleichmäßigen Abständen vertikal verlaufende Holzlatten aufgebracht sind. Die Latten weisen einen im wesentlichen trapezförmigen Querschnitt auf. Sie können aber auch ein im wesentlichen rechtekkiges Profil haben, bei dem die Längsseiten in Richtung Trägerplatte hinterschnitten oder mit einer Stufe bzw. Nut versehen sind. Man erkennt in der Zeichnung, daß die Latten in Längsrichtung zusätzlich mit Verbreiterungen versehen sind. Dies kann zweckmäßig durch seitlich aufgesetzte Profilleisten erfolgen. Man kann aber auch die Profilbreite der Latten in Längsrichtung variieren und seitliche (bevorzugt einstückige) Erhebungen, Nocken oder Bolzen vorsehen. Denkbar ist auch die Ausbildung einer zinnen- oder sägezahnförmigen Seitenfläche. Die Verbreiterungen können ein- oder beidseitig ausgebildet sein und in gleichmäßigen oder ungleichmäßigen Abständen liegen.

In weiteren Vormontage-Gängen können auf der Holzkonstruktion haustechnische Installationen vorgenommen werden. Beispielsweise kann man auf den Holzlatten ein Wandheizungsregister anbringen, das sich über die gesamte Höhe und Breite des Wandelements erstreckt und an geeignete Anschlußleitungen anschließbar ist. Ferner können zwischen der Trägerplatte und den Holzlatten wärmedämmende (nicht dargestellte) Zwischenschichten, z.B. Schilfdämmplatten, in Sandwichbauweise ein- oder aufgebracht werden.

Die Latten bilden eine Tragstruktur für den in einer Deckschicht aufzubringenden BioFaserLehm. Dieser wird in der oben beschriebenen Art und Weise hergestellt und in einem einzigen Arbeitsgang in einer gewünschten Schichtdicke aufgebracht. Die Holzprofile und deren Verbreiterungen bewirken einen optimalen Verbund zwischen dem BioFaserLehm-Baustoff und der Trägerplatte. Die Verbreiterungen verhindern zudem ein Absacken des Lehmputzes.

Die fertigen Lehmbaustoff-Wandelemente können als Bauplatten für den Trockenausbau verwendet werden. Sie können aber auch als Beplankungselemente ausgebildet sein, die auf Tragstrukturen im Holzbau, im Ziegelbau oder im Matelbetonbau zum Einsatz kommen.

Zum Verbinden der Platten oder Beplankungselementen untereinander ist die Trägerplatte rundum mit einer umlaufenden Nut versehen. Diese dient der Aufnahme von (nicht gezeigten) fremden Federn, so daß man benachbarte Platten auf Stoß sicher miteinander verbinden kann. Durch Verkleben der Federn in den Nuten mit einem PU-Kleber wird ein dauerhaft fester Halt erzielt.

Zum Befestigten der Platten bzw. Beplankungselemente an einer Wand, Decke oder Unterkonstruktion sind in die Rückseite der Trägerplatte (nicht dargestellte) Montage-Clipse mit Raststiften eingelassen. Diese greifen in wand- bzw. deckenseitig vorgesehene Rastlöcher ein und sorgen für einen festen Halt der Platten bzw. Wandelemente. Die Raststifte lassen sich durch Anreißstifte austauschen. Dies ermöglicht ein einfaches Einpassen und Montieren der Wandelemente.

Bei der Herstellung der Beplankungselemente wird zunächst die Trägerplatte vorgefertigt und mit den Profilleisten versehen. Auf die Profilleisten wird ein Wandheizungselement aufgesetzt und an den Latten befestigt. Anschließend bringt man in einem Arbeitsgang den BioFaserLehm in Form eines Lehmputes auf und trocknet ihn mit einem Hochfrequenzverfahren. Die Taktzeit beträgt bevorzugt etwa 10 Minuten. Auf diese Weise trocknet die Lehmschicht von innen nach außen und sehr viel schneller und gleichmäßiger im Vergleich zu der sonst üblichen Warmlufttrocknung, die eine Trocknungsdauer von 3 bis 5 Tagen aufweist.

Die Erfindung ist nicht auf eine der vorbeschriebenen Ausführungsformen beschränkt, sondern in vielfältiger Weise abwandelbar. Man erkennt, daß eine Baustoffmischung aus ungebranntem Lehm und/oder Ton eine Beimischung aus 5 bis 15 mm langen, mechanisch aufbereiteten Hanf-, Flachs-, Kenaf-, Nesselfasern oder ähnlichen biogenen Fasern enthält. Der Baustoff ist ferner frei von synthetischen und/oder biologisch nicht abbaubaren Zuschlagstoffen und besitzt eine Konsistenz zwischen den Konsistenzbereichen K3 und K5 gemäß ÖNORM B 4200 (Teil 10 Abschnitt 3.8). Als zusätzliche Komponenten sind Schäbenanteile, Faserbeimischungen mit Faserlägen über 15 mm sowie weitere mineralische und/oder pflanzliche Zuschlagstoffe vorgesehen.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 10: Lehm-Fertigbauteil/Wandelement
- 12: Trägerplatte
- 14: Nut
- 20: Tragstruktur
- 22: Holzlatte
- 23: Verbreiterung/Profilleiste
- 30: Deckschicht aus BioFaserLehm
- 34: Wandheizungsregister

## Patentansprüche

1. Baustoffmischung aus ungebranntem Lehm und/oder Ton mit einer Beimischung aus pflanzlichen Fasern, die mechanisch aufbereitete Bastfasem sind, insbesondere biogene Fasern wie Hanf-, Flachs-, Kenaf- und Nesselfasern, wobei der Baustoff frei von synthetischen und/oder biologisch nicht abbaubaren Zuschlagstoffen ist, **dadurch gekennzeichnet, daß** die Bastfasern trocken-mechanisch oder feucht-mikrobiell-mechanisch aufbereitet sind und eine Länge von 5 bis 15 mm aufweisen, daß der Anteil der Bastfasern über 0,1 Gewichtsprozent der Gesamtbaustoffmasse beträgt und daß die Konsistenz der Baustoffmischung zwischen den Konsistenzbereichen K3 und K5 gemäß ÖNORM B 4200 (Teil 10 Abschnitt 3.8) liegt.

2. Baustoffmischung nach Anspruch 1, **gekennzeichnet durch** eine weitere Beimischung von pflanzlichen Zuschlagstoffen.

3. Verfahren zur Herstellung einer Baustoffmischung gemäß Anspruch 1 oder 2, bei welchem ein Gemenge aus ungebranntem Lehm und/oder Ton mit einer erforderlichen Menge Sand und einer Beimischung aus pflanzlichen Fasern versetzt wird, die mechanisch aufbereitete Bastfasern sind, insbesondere biogene Fasern wie Hanf-, Flachs-, Kenaf- und Nesselfasern, wobei der Baustoff frei von synthetischen und/oder biologisch nicht abbaubaren Zuschlagstoffen ist, **dadurch gekennzeichnet, daß** die Bastfasem mit einer Länge von 5 bis 15 mm trocken-mechanisch oder feucht-mikrobiell-mechanisch aufbereitet werden, daß die Bastfasern der Gesamtbaustoffmasse mit einem Anteil über 0,1 Gewichtsprozent zugegeben werden und daß die Konsistenz der Baustoffmischung unter Zugabe von Anmachwasser auf einen Wert zwischen den Konsistenzbereichen K3 und K5 gemäß ÖNORM B 4200 (Teil 10 Abschnitt 3.8) eingestellt wird.

4. Verfahren nach Anspruch 3, **dadurch gekennzeichnet, daß** die Hanffasem aus Hanfstroh oder Hanfkurzfasem gewonnen sind.

5. Verfahren nach Anspruch 3 oder 4, **dadurch gekennzeichnet, daß** eine weitere Beimischung von pflanzlichen Zuschlagstoffen zugegeben wird.

6. Verwendung einer Baustoffmischung gemäß einem der Ansprüche 1 oder 2 in Form von Mörtel, Ausfachungsmassen, Spritzlehm bzw. pumpfähigen, plastischen Lehmbaustoffen für die Herstellung von Bauplatten für den Trockenausbau, insbesondere von Lehm-Fertigbauteilen, **dadurch gekennzeichnet, daß** sich auf einer Seite einer Tragstruktur aus Holz eine mechanisch und durch Trocknung fest verbundene Schicht der Baustoffmischung befindet.

7. Verwendung nach Anspruch 6, **dadurch gekennzeichnet, daß** sich zwischen zwei Lehmbaustoffschichten, die mechanisch und durch Trocknung fest mit einer Holzkonstruktion verbunden sind, eine Tragstruktur samt einer Dämmstoffschicht befindet, wobei die Oberfläche der Holzkonstruktion derart ausgebildet ist, daß auch die Dämmstoffschicht mit dem durch eine Hanffaser- oder Hanfkurzfaserbeimischung armierten Lehmbaustoff in Berührung tritt, und daß alle Schichten einen gemeinsamen Körper bilden.

8. Verwendung nach Anspruch 6 oder 7, **dadurch gekennzeichnet, daß** das holzverstärkte Lehm-Fertigbauteil ein Außenwand-Fertigteil ist, dessen Außenseite mit einer Hinterlüftungsebene in Form einer Konterlattung und einer witterungsbeständigen Fassadenverkleidung versehen ist.

9. Verwendung nach Anspruch 6 oder 7, **dadurch gekennzeichnet, daß** das holzverstärkte Lehm-Fertigbauteil ein Innenwand-Fertigteil ist, dessen Oberfläche ein- oder beidseitig eine Schicht aus der Baustoffmischung aufweist.

10. Lehm-Fertigbauteil, hergestellt unter Verwendung einer Baustoffmischung gemäß einem der Ansprüche 1 oder 2, gekennzeichnet
a) durch eine Trägerplatte aus Holzwerkstoff,
b) durch eine auf der Trägerplatte befestigte Tragstruktur aus Holzprofilen, und
c) durch eine Beschichtung der Trägerplatte und der Tragstruktur mit BioFaserLehm.

11. Fertigbauteil nach Anspruch 10, **dadurch gekennzeichnet, daß** die Holzprofile Latten mit im wesentlichen trapezförmigem Querschnitt sind.

12. Fertigbauteil nach Anspruch 10 oder 11, **dadurch gekennzeichnet, daß** die Latten wechselnde Querschnitte und/oder wechselnde Profilbreiten haben.

13. Fertigbauteil nach einem der Ansprüche 10 bis 12, **dadurch gekennzeichnet, daß** auf der Trägerplatte und/oder auf der Tragstruktur haustechnische Installationen und/oder wärmedämmende Zwischenschichten angebracht sind.

14. Fertigbauteil nach einem der Ansprüche 10 bis 13, **dadurch gekennzeichnet, daß** die Trägerplatte mit einem Schnellmontage-System, z.B. einem Clips-System, ausgestattet ist.

## Claims

1. Building material made of unfired loam and/or clay comprising an admixture of vegetable fibres which are mechanically processed bast fibres, in particular biogenous fibres such as hemp, flax, kenaf and nettle fibres, with the building material being free of synthetic and/or biologically not degradable aggregates, **characterized in that** the bast fibres are dry-mechanically or moist-microbial-mechanically processed and have a length of 5 to 15 mm, that the portion of bast fibres amounts to more than 0.1 weight percent of the total weight of the building material, and that the consistency of the building material is between the consistency ranges K3 and K5 according to the Austrian standard ÖNORM B 4200 (part 10, section 3.8).

2. Building material as defined in claim 1, **characterized in that** it comprises a further admixture of vegetable aggregates.

3. Process for the manufacture of a building material as defined in claim 1 or claim 2 whereby a mixture of unfired loam and/or clay is mixed with a required quantity of sand and an admixture of vegetable fibres which are mechanically processed bast fibres, in particular biogenous fibres such as hemp, flax, kenaf and nettle fibres, with the building material being free of synthetic and/or biologically not degradable aggregates, **characterized in that** the bast fibres with a length of 5 to 15 mm are dry-mechanically or moist-microbial-mechanically processed, that the bast fibres are added to the total building material with a portion of 0.1 weight percent, and that the consistency of the building material is adjusted to a value between the consistency ranges K3 and K5 according to the Austrian standard ÖNORM B 4200 (part 10, section 3.8) by adding mixing water.

4. Process as defined in claim 3, **characterized in that** the hemp fibres are produced from hemp straw or hemp short fibres.

5. Process as defined in claim 3 or claim 4, **characterized in that** a further admixture of vegetable aggregates is added.

6. Use of a building material as defined in claim 1 or claim 2 in form of mortar, infill material, sprayed clay plaster and pumpable plastic loam building material, respectively, for the manufacture of building slabs for dry construction works, in particular prefabricated loam parts, **characterized in that** a wooden supporting structure has on one of its sides a layer of the building material which is firmly attached by mechanical and drying methods.

7. Use as defined in claim 6, **characterized in that** a supporting structure including an insulating material layer is arranged between two loam building material layers that are firmly attached to a timber construction by mechanical and drying methods, with the surface of the timber construction being formed in such a manner that also the insulating material layer is in contact with the loam building material which is reinforced by an admixture of hemp fibres or hemp short fibres, and that all layers form one common body.

8. Use as defined in claim 6 or claim 7, **characterized in that** the wood reinforced prefabricated loam part is a prefabricated outer wall with an external ventilated wall cladding in form of counter laths and a weatherproof curtain wall.

9. Use as defined in claim 6 or claim 7, **characterized in that** the wood reinforced prefabricated loam part is a prefabricated inner wall with its surface comprising a one-side or both-side layer of the building material.

10. Prefabricated loam part, manufactured by using a building material as defined in claim 1 or claim 2, **characterized by**
a) a carrier plate made of a derived timber product,
b) a supporting structure made of wood profiles attached to the carrier plate, and
c) a coating of the carrier plate and the supporting structure with biological fibre-clay.

11. Prefabricated part as defined in claim 10, **characterized in that** the wood profiles are battens with a substantially trapezoidal cross section.

12. Prefabricated part as defined in claim 10 or claim 11, **characterized in that** the laths have varying cross sections and/or profile widths.

13. Prefabricated part as defined in any one of claims 10 to 12, **characterized in that** technical building installations and/or heat insulating intermediate layers are arranged on the carrier plate and/or on the supporting structure.

14. Prefabricated part as defined in any one of claims 10 to 13, **characterized in that** the carrier plate is provided with a quick mounting system, e. g. a clip system.

## Revendications

1. Matériaux de construction en limon et/ou argile cru avec comme additif des fibres végétales qui sont des fibres libériennes préparées mécaniquement, notamment des fibres biogènes telles que des fibres de chanvre, de lin, de kénaf et d'ortie, lesdits matériaux de construction étant libres d'adjuvants synthétiques et/ou biologiquement non dégradables, **caractérisés en ce que** les fibres libériennes sont traitées par des procédés mécaniques à sec ou des procédés au mouillé microbiens mécaniques et présentent une longueur de 5 à 15 mm, que la proportion des fibres libériennes s'élève à plus de 0,1 pourcentage poids de la masse totale des matériaux de construction et que la consistance des matériaux de construction est entre les plages de consistance K3 et K5 conformément à la norme autrichienne ÖNORM B 4200 (partie 10, section 3.8).

2. Matériaux de construction selon la revendication 1, **caractérisés par** un additif ultérieur d'adjuvants végétaux.

3. Procédé de fabrication de matériaux de construction selon la revendication 1 ou 2, dans lequel un mélange de limon et/ou argile cru est enrichi d'une quantité requise de sable et un additif de fibres végétales qui sont des fibres libériennes préparées mécaniquement, notamment des fibres biogènes telles que des fibres de chanvre, de lin, de kénaf et d'ortie, lesdits matériaux de construction étant libres d'adjuvants synthétiques et/ou biologiquement non dégradables, **caractérisé en ce que** les fibres libériennes ayant une longueur de 5 à 15 mm sont traitées par des procédés mécaniques à sec ou des procédés au mouillé microbiens mécaniques, que les fibres libériennes sont ajoutées à la masse totale des matériaux de construction avec une proportion de plus de 0,1 pourcentage poids, et que la consistance des matériaux de construction est ajustée à une valeur entre les plages de consistance K3 et K5 conformément à la norme autrichienne ÖNORM B 4200 (partie 10, section 3.8) en ajoutant de l'eau à gâchage.

4. Procédé selon la revendication 3, **caractérisé en ce que** les fibres de chanvre sont produites à partir de paille de chanvre ou de fibres courtes de chanvre.

5. Procédé selon la revendication 3 ou 4, **caractérisé en ce qu'**un autre additif d'adjuvants végétaux est ajouté.

6. Utilisation de matériaux de construction selon l'une des revendications 1 ou 2 sous forme de respectivement mortier, masses de remplissage, limon projeté et matériaux de construction plastiques en limon aptes au pompage pour la fabrication de panneaux de construction pour la pose à sec, notamment d'éléments de construction en limon préfabriqués, **caractérisée en ce qu'**une ossature porteuse en bois est couverte sur une de ses faces d'une couche des matériaux de construction qui est fermement attachée à l'aide de moyens mécaniques et de séchage.

7. Utilisation selon la revendication 6, **caractérisée en ce qu'** une ossature porteuse ainsi qu'une couche de matériau isolant sont disposées entre deux couches de matériaux de construction en limon qui sont fermement attachées à une construction en bois à l'aide de moyens mécaniques et de séchage, la surface de ladite construction en bois étant formée de manière à ce que même la couche de matériau isolant vient en contact avec les matériaux de construction en limon renforcés par un additif de fibres de chanvre ou de fibres courtes de chanvre, et que toutes les couches forment un corps commun.

8. Utilisation selon la revendication 6 ou 7, **caractérisée en ce que** l'élément de construction préfabriqué en limon ayant un renforcement en bois est un parois extérieur préfabriqué dont la face externe est munie d'une ventilation arrière sous forme d'un contre-lattis et un revêtement de façade résistant aux intempéries.

9. Utilisation selon la revendication 6 ou 7, **caractérisée en ce que** l'élément de construction préfabriqué en limon avec renforcement en bois est un parois intérieur préfabriqué dont la surface est munie sur une face ou sur les deux faces d'une couche des matériaux de construction.

10. Élément de construction préfabriqué en limon, fabriqué en utilisant des matériaux de construction conformément à l'une des revendications 1 ou 2, **caractérisé**
a) par une plaque support en matériau dérivé du bois,
b) par une ossature porteuse en tasseaux en bois montée sur ladite plaque support, et
c) en ce que la plaque support et l'ossature porteuse sont couvertes d'une argile aux fibres végétales.

11. Élément de construction préfabriqué selon la revendication 10, **caractérisé en ce que** les tasseaux en bois sont des lattes ayant pour l'essentiel une coupe transversale trapézoïdale.

12. Élément de construction préfabriqué selon la revendication 10 ou 11, **caractérisé en ce que** les lattes ont des coupes transversales et/ou des largeurs de profil variables.

13. Élément de construction préfabriqué selon l'une des revendications 10 à 12, **caractérisé en ce que** des installations techniques de bâtiment et/ou des couches intermédiaires d'isolation thermique sont montées sur ladite plaque support et/ou sur ladite ossature porteuse.

14. Élément de construction préfabriqué selon l'une des revendications 10 à 13, **caractérisé en ce que** ladite plaque support est munie d'un système de montage rapide, p. ex. un système à clip.
